# EUROPEAN PATENT SPECIFICATION

(11) **EP 2 157 850 B1**
(45) Date of publication and mention of the grant of the patent: **05.10.2016**
(21) Application number: 08766920.6
(22) Date of filing: 10.06.2008
(51) Int. Cl.: A01K 61/00, A01K 63/00

(54) **CURRENT PRODUCING MEANS FOR FISH REARING VESSEL.**
STROMERZEUGUNGSVORRICHTUNG FÜR EIN FISCHZUCHTBEHÄLTNIS
MOYEN DE PRODUCTION DE COURANT POUR UN RÉCIPIENT DE PISCICULTURE

(30) Priority: 11.06.2007 NO 20072945
(43) Date of publication of application: 03.03.2010
(73) Proprietor: Artec Aqua As, 6021 Aalesund (NO)
(72) Inventor: FIVELAND, Victor, N-6014 Aalesund (NO)
(74) Representative: Curo AS
(86) International application number: PCT/NO2008/000207
(87) International publication number: WO 2008/153408

(56) References cited:
- EP-A2- 0 616 767
- WO-A1-97/38573
- GB-A- 2 285 904
- NL-C2- 1 026 480
- NO-B- 160 753
- 'ECO-FLOW (Aqua Optima)' November 2007,

## Description

The invention concerns a current producing means, as stated in the introductory part of patent claim 1.

Current producing means of this type are being used in fish rearing vessels, particularly at land based fish farms, in situations where it is desirable to establish a water current in the vessel to establish a natural aquatic environment.

### Background

In order to make fish living in a vessel onshore feel comfortable, they need fresh water, and the same water must have correct speed. Today, the water is usually supplied to the vessel via a vertical static slotted pipe. A static slotted pipe is basically only a pipe provided with one or more slits/slots/holes/nozzles, distributed evenly along the pipe from bottom to top. When the water flows through the static slotted pipe and through the slits, the jet speed vary depending on the total slit area and the water quantity. The more water, the higher is the jet speed. The larger area, the lower is the jet speed (Q=v*A).

In accordance with the prior art, a pipe provided with axial nozzle openings, is inserted vertically down into the water bulk phase (ECO-FLOX from Aquaoptima) near the cylindrical rim of the vessel, this creating a rotary water movement in the vessel. This pipe has been provided with adjustable orifices to enable closing of any number of nozzle openings. However, an increased pumping pressure will in this case result in an increased water flow. This is not satisfactory, because it is desirable to keep a constant vessel water speed, irrespective of pressure and water quantity.

In view of the commonly used residence times applied in rearing fish, the typical overall water speed in the vessel (the speed experienced by the fish) will constitute between 5 and 20 % of the jet speed. This is somewhat simplified, since numerous direct and indirect parameters, such as fish species, fish size, fish density, water temperature, salinity, feeding regime, light regime, vessel type (polygon shaped/circular vessel), ovality, sewer type, etc., will affect this factor.

The static slotted pipe from the prior art can only be dimensioned for a given quantity of fish at a certain load. In practice, it is impossible to keep those assumptions, and the water need will vary from one vessel to another. That is, the water speed in the vessel is different from one vessel to another. It has been made systems which makes it possible to close slot by slot, to reduce or increase the area, but in practice, this has not shown to work, and it is too bothersome to operate.

WO 97/38573 A1 is related to a water current producing device for cylindrical fish rearing vessels. The problem to be solved was to provide an aquaculture system (closed or land-based system) that was able to provide fresh water to maintain a desired oxygen level and remove waste material from the vessel. The device exhibits a supply pipe for supply of water provided with numerous nozzle openings. However, the nozzle openings of this publication are static and their flow area does not change. In order to change the water flow velocity in the vessel, the water flow rate must be changed. According to claim 1, the rate of flow of water to the tank is variable via a valve coupled to the pump well.

### Object

The main object of the present invention is to provide a manually operateable means for producing current, which enables accurate adaption of the current. A possibility to increase the water quantity without increasing the outlet speed, or to adjust the outlet speed at a certain water quantity, is also desirable.

### The invention

The invention is stated in patent claim 1. In this way, it is possible to vary the total outlet opening area, and keep an optimal water speed (optimal swimming speed) without using too little or too much water. Thus, it is possible to keep the following value constants: Q=v*A to become independent on the water need.

There are substantially two ways to amend this area with. One alternative is to use nozzles shaped in such a way that it is possible to amend the area of the holes. It is also possible to decrease the slot/hole area by moving something above the same, in a stepless wise, closing or opening them more and more. The latter is the most relevant.

The invention also enables a stepless amendment of the hole area, or nozzle area, to be able to maintain a constant outlet speed, independent on the water quantity, and to be able to adjust the outlet speed at constant flow, or a combination of these two.

### Example

The invention is in the following described in further details with reference to an example of an embodiment, illustrated in the figures, wherein
Figure 1 illustrates a perspective view of a fish rearing vessel having a current producing means in accordance with the invention.
Figure 2 illustrates a top view of the current producing means of Figure 1,
Figure 3 and 4 show side views of the current producing means of Figure 2, from two different positions.

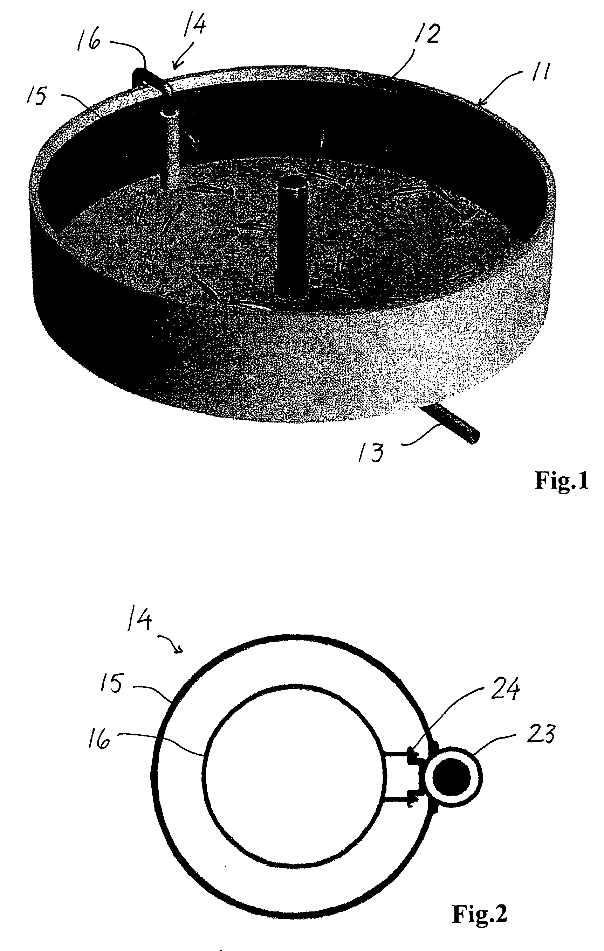

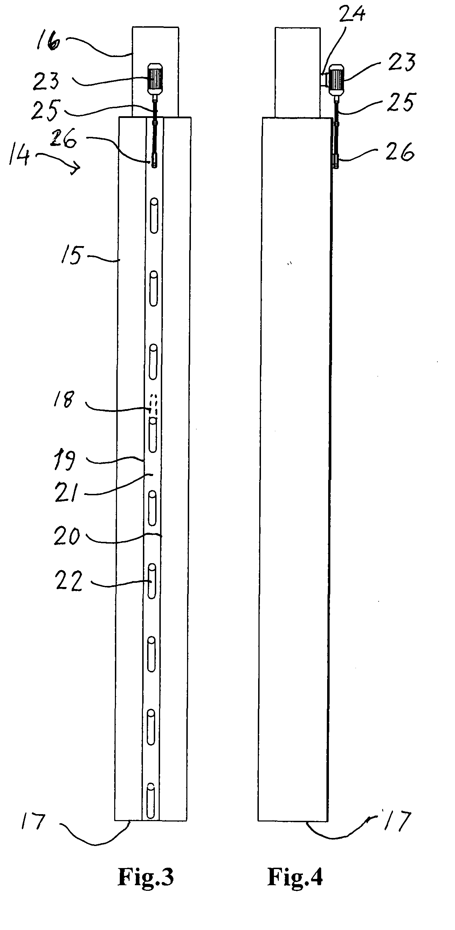

Figure 1 illustrates a cylindrical fish rearing vessel 11 constructed for onshore use. An overflow pipe 21 is arranged centrally within the vessel, and having an outlet 13 arranged laterally in the rearing vessel. The illustrated fish rearing vessel exhibits a circular cross section, whereas the invention also is applicable on fish rearing vessels having other cross section shapes, particularly polygon shaped. A current producing means 14 having vertically extending distribution pipes 15 and a supply pipe 16 guided in a U-shaped path above the rim of the fish rearing vessel, from a water supply (not shown), is arranged by an edge of the rearing vessel 11, and is optionally connected with a pump. The details of the current producing means in the example will appear from the Figures 2 to 4.

Figure 2-4 illustrates an embodiment of a current producing means in accordance with the present invention. The distributor pipe 15 is fed by the supply pipe 16, which is inserted at the upper edge of the distributor pipe 15. The lower end 17 of the distributor pipe is closed. En elongate row of nine axial slits 18 are cut into the pipe wall at one side of the distributor pipe. The slits 18 exhibit a length which is larger than the width, by a factor of 2.

At each side of the slits 18, longitudinal axial guides 19, 20 are arranged, which there between keep a longitudinal, axially displaceable slide shaped damper 21, having nine axial slits 22 which correspond to the slits 18 in the pipe wall, enabling the damper 21 to be guided between full overlap between two and two slits, and to a partial overlap producing a circular hole opening for each pair of slits, alternatively to full closure. The damper means 21 is slide shaped and is contained between a couple of lateral guides 19, 20 connected to the distributor pipe 15 or formed integrally with the same.

The number of slits can be higher or lower than in the example, depending on the slit length and the length of the distributor pipe 15.

In order to move the damper 21, an engine 23 is connected to the supply pipe 16 by a bracket 24 (Fig. 2). The engine moves a threaded spindle 25 which engages with a corresponding nut 26 on the damper 21, in such a way that it works like a linear motor. By operating the engine 23 in one direction or the other, the damper 21 will be guided between their respective end positions by opening and closing, and with possibility to stop within any intermediate position to control effective outlet opening between closed and fully open, by overlapping the slits 18 and 22.

In this way, it is possible to perform adaption of the outlet openings in accordance with the desired operating conditions.

The damper 21 illustrated in the example can also be shaped as a coaxial, tightly enclosing and slideable pipe, having an elongate row of axially extending slits.

The slits 18 and 22 are preferably provided with rounded ends, which enable a more satisfactory control towards closing than with rectangular slit openings.

## Claims

1. Current producing device for cylindrical fish rearing vessels (11), particularly with a circular cross-section, and comprising at least one supply pipe (16) for supply of water and one distributor pipe (15), which distributor pipe (15) is located by the edge of a rearing vessel and provided with numerous nozzle openings (18), and a damper means (21) provided with holes and adjustable with regard to the nozzle openings (18), **characterized in that**
- the damper means (21) is arranged axially displaceable between lateral guides (19,20),
- that the nozzle openings (18) in the distributor pipe (15) are formed as axially extending slits, each having a length which exceeds its width by a factor of 2 or more,
that said holes in the damper means (21) are slit openings (22) corresponding to the slit openings in the distributor pipe (15) in shape and number, and
that the damper means (21) is connected to a linear motor (23, 25) for controlling the axial movement.

2. Current producing device according to claim 1, **characterized in that** the damper means (21) is slide shaped and is contained between a couple of lateral guides (19, 20) connected to the distributor pipe (15) or formed integrally with the same.

3. Current producing device according to claim 1 or 2, **characterized in that** the slit openings (18) in the distributor pipe (15) and slit openings (22) in the damper means (21) are substantially equal, wherein the damper means is prepared to be displaced between complete overlap and define a circular hole.

4. Current producing device in accordance with any one of claims 1 to 3, **characterized in that** the slit openings (18, 22) exhibit rounded ends.

5. Current producing device according to claim 1, **characterized in that** the damper means is integrated into a pipe which encloses the supply pipe.

## Patentansprüche

1. Strömungserzeugungsvorrichtung für zylindrische Fischzuchtbehältnisse (11), insbesondere mit einem runden Querschnitt, welche mindestens ein Versorgungsrohr (16) zur Wasserversorgung und ein Verteilerrohr (15), wobei sich das Verteilerrohr (15) am Rand eines Zuchtbehältnisses befindet und mit zahlreichen Düsenöffnungen (18) versehen ist, und ein Dämpfungsmittel (21) aufweist, das mit Löchern und verstellbar bezüglich der Düsenöffnungen (18) ausgebildet ist, **dadurch gekennzeichnet,**
- **dass** das Dämpfungsmittel (21) axial verschiebbar zwischen Seitenführungen (19, 20) angeordnet ist,
- **dass** die Düsenöffnungen (18) in dem Verteilerrohr (15) als sich axial erstreckende Schlitze ausgebildet sind, wobei jeder eine Länge hat, die um den Faktor 2 oder mehr größer ist als seine Breite,
- **dass** die Löcher in dem Dämpfungsmittel (21) Schlitzöffnungen (22) sind, die den Schlitzöffnungen in dem Verteilerrohr (15) in Form und Anzahl entsprechen und
- **dass** das Dämpfungsmittel (21) mit einem Linearmotor (23, 25) zum Steuern der axialen Bewegung verbunden ist.

2. Strömungserzeugungsvorrichtung nach Anspruch 1,
**dadurch gekennzeichnet,**
**dass** das Dämpfungsmittel (21) schlittenförmig ist und zwischen einigen Seitenführungen (19, 20) enthalten ist, die mit dem Verteilerrohr (15) verbunden sind oder einstückig mit demselben ausgebildet sind.

3. Strömungserzeugungsvorrichtung nach Anspruch 1 oder 2,
**dadurch gekennzeichnet,**
**dass** die Schlitzöffnungen (18) in dem Verteilerrohr (15) und die Schlitzöffnungen (22) in dem Dämpfungsmittel (21) im Wesentlichen gleich sind, wobei das Dämpfungsmittel präpariert ist, um zwischen vollständigem Überlappen und Definieren eines runden Loches verschoben zu werden.

4. Strömungserzeugungsvorrichtung nach einem der Ansprüche 1 bis 3,
**dadurch gekennzeichnet,**
**dass** die Schlitzöffnungen (18, 22) abgerundete Enden aufweisen.

5. Strömungserzeugungsvorrichtung nach Anspruch 1,
**dadurch gekennzeichnet,**
**dass** das Dämpfungsmittel in einem Rohr integriert ist, welches das Versorgungsrohr umschließt.

## Revendications

1. Dispositif de production de courant destiné à des cuves d'élevage de poissons cylindriques (11), plus particulièrement avec une section transversale circulaire, et qui comprend au moins un tuyau d'alimentation (16) destiné à l'alimentation en eau et un tuyau de distribution (15), lequel tuyau de distribution (15) est situé près du bord d'une cuve d'élevage et muni de nombreuses ouvertures de buses (18), et un registre (21) muni d'orifices et réglable par rapport aux ouvertures de buses (18), **caractérisé en ce que**
- le registre (21) est disposé de manière axialement mobile entre des guides latéraux (19, 20),
- les ouvertures de buses (18) au sein du tuyau de distribution (15) sont formées comme des fentes qui s'étendent axialement, et possèdent chacune une longueur qui dépasse leur largeur selon un facteur de 2 ou plus,
- lesdits orifices au sein du registre (21) sont des ouvertures à fentes (22) qui correspondent en forme et en nombre aux ouvertures à fentes situées dans le tuyau de distribution (15), et
- le registre (21) est relié à un moteur linéaire (23, 25) destiné à contrôler le mouvement axial.

2. Dispositif de production de courant selon la revendication 1, **caractérisé en ce que** le registre (21) est en forme de coulisseau et est contenu entre une paire de guides latéraux (19, 20) reliés au tuyau de distribution (15) ou formés intégralement avec celui-ci.

3. Dispositif de production de courant selon la revendication 1 ou 2, **caractérisé en ce que** les ouvertures à fentes (18) au sein du tuyau de distribution (15) et les ouvertures à fentes (22) dans le registre (21) sont sensiblement identiques, le registre étant préparé pour être déplacé en chevauchement complet et pour définir un orifice circulaire.

4. Dispositif de production de courant selon l'une quelconque des revendications 1 à 3, **caractérisé en ce que** les ouvertures à fentes (18, 22) présentent des extrémités arrondies.

5. Dispositif de production de courant selon la revendication 1, **caractérisé en ce que** le registre est intégré à un tuyau qui enferme le tuyau d'alimentation.
